# EUROPÄISCHE PATENTANMELDUNG

(11) **EP 4 446 921 A1**
(43) Veröffentlichungstag der Anmeldung: **16.10.2024**
(21) Anmeldenummer: 23167273.4
(22) Anmeldetag: 11.04.2023
(51) Int. Cl.: G06F 21/62, H04L 9/40

(54) **VERFAHREN, KONTROLLINSTANZ UND COMPUTERPROGRAMMPRODUKT ZUR KONTROLLE EINES ZUGRIFFS AUF STRUKTURIERTE DATEN ODER AUF FUNKTIONEN EINER INDUSTRIELLEN AUTOMATISIERUNGSANORDNUNG**

(71) Anmelder: Siemens Aktiengesellschaft, 80333 München (DE)
(72) Erfinder: KOHLER, Lukas, 76137 Karlsruhe (DE); SIEGEL, Tobias, 92318 Neumarkt in der Oberpfalz (DE); TYLKA, Joseph, Pennington 08534 (US); BREU, Annemarie, Lawrenceville 08648 (US)
(74) Vertreter: Siemens Patent Attorneys

(57) **Zusammenfassung**

Verfahren und Kontrollinstanz zur Kontrolle eines Zugriffs auf strukturierte Daten oder Funktionen einer industriellen Automatisierungsanordnung, wobei der Zugriff auf die Daten oder Funktionen kontrolliert wird. Dabei wird den Daten oder Funktionen eine Klassifizierung mit einer bestimmten Vertraulichkeitsklasse (0, ..., 3) aus einer Mehrzahl Vertraulichkeitsklassen (0, ..., 3) zugeordnet, wobei einem Nutzer oder einer technischen Instanz eine Nutzerklasse aus einer Anzahl Nutzerklassen zugeordnet wird, wobei, vorzugsweise nach Art einer Matrix, für viele oder jede der Vertraulichkeitsklassen (0, ..., 3) und für viele oder jede der Nutzerklassen eine Zugriffsberechtigung festgelegt wird, wobei die Zugriffsberechtigung die Restriktionen des Zugriffs der Nutzer oder technischen Instanz der jeweiligen Nutzerklasse auf die der jeweiligen Vertraulichkeitsklasse (0, ..., 3) zugeordneten Daten oder Funktionen definiert, und wobei anhand der jeweils definierten Restriktionen der Zugriff auf die den jeweiligen Vertraulichkeitsklassen (0, ..., 3) zugeordneten Daten oder Funktionen durch die den jeweils den Nutzerklassen zugeordneten Nutzern oder technischen Instanzen kontrolliert wird. Damit werden Benutzer- oder Maschinenzugriff und Berechtigungen aus den Vertraulichkeitsklassifizierungen der Daten bzw. Datenstrukturen oder Funktionen selbst gesteuert und somit ein umfassender Ansatz bereitgestellt, um automatisch die Berechtigung bekannter Benutzer oder technischer Entitäten für den Zugriff auf und die Änderung bestimmter Daten oder Datenstrukturen oder Funktionen zu ermitteln.

## Beschreibung

Die Erfindung betrifft ein Verfahren zur Kontrolle eines Zugriffs auf strukturierte Daten oder auf Funktionen einer industriellen Automatisierungsanordnung gemäß dem Oberbegriff des Patentanspruchs 1, eine Kontrollinstanz zur Kontrolle eines Zugriffs auf strukturierte Daten oder auf Funktionen einer industriellen Automatisierungsanordnung gemäß dem Oberbegriff des Patentanspruchs 11, und Computerprogrammprodukt zur Kontrolle eines Zugriffs auf strukturierte Daten oder auf Funktionen einer industriellen Automatisierungsanordnung gemäß dem Oberbegriff des Patentanspruchs 12.

Mit dem Aufkommen von Edge Computing in der Automatisierung (z. B. in der Fertigung, Gebäu-den usw.) werden große Datenmengen generiert und automatisch in lokale (On-Device), On-Premise- (am Standort) und Cloud- (z.B. Internet) gehostete Datenbanken übertragen. Für einige sensible Anwendungen, z.B. in der Medizin- und Verteidigungsindustrie, benötigen Kunden strenge Zugriffskontrollrichtlinien, die im gesamten Datenfluss durchgesetzt werden. Die vorliegende Erfindung befasst sich mit der Konfiguration und Implementierung solcher Datenklassifizierungs-richtlinien in industriellen Automatisierungsanordnungen, insbesondere in industriellen Edge- und Cloud-Computing-Systemen / -Infrastrukturen.

Als repräsentative Implementierung von Klassifikationsstufen verwenden wir hier beispielhaft die folgende Sensitivitätsskala (im Folgenden auch Vertraulichkeitsklassen genannt):
0 - Uneingeschränkt;
1 - Eingeschränkt (nur intern);
2 - Vertraulich; und
3 - Streng vertraulich.

Zu beachten ist, dass diese Skalierung nur als Beispiel oder Standardspezifikation dient. Die vorliegende Erfindung kann leicht erweitert werden, um benutzerdefinierte oder konfigurierbare Empfindlichkeits-skalen bzw. Vertraulichkeitsklassen aufzunehmen. In einem hierarchischen Datenmodell, wie z.B. typischen Asset- / Aspekt- / Variablen-Strukturen, kann dieses Klassifizierungsschema wie in einer Baumstruktur angelegt werden.

Datenbanktechnologien ermöglichen im Stand der Technik den Zugriff und die Autorisierung pro Datenbank. Die Datenbanken sind in der Regel in semantische Datenmodelle strukturiert, die eine hierarchische Asset-Struktur darstellen.

Bekannt ist im Stand der Technik eine Zugriffskontrolle in Datenbanktechnologien. Die meisten modernen Datenbanken (z. B. PostgreSQL, MongoDB, InfluxDB usw.) werden mit einem integrier-ten Datenbankmanagementsystem (DBMS) verteilt, das Zugriffskontrollrichtlinien und Tools bereitstellt. Obwohl die zugrunde liegenden Datenstrukturen, die innerhalb der Datenbank angeboten werden (z. B. Unterdatenbanken, Ressourcen, Buckets, Tags, Datenpunkte, Shards usw.), von ihrer Implementierung abhängen, wird das DBMS im Allgemeinen Benutzerzugriffsrechte für diese Strukturen bereitstellen und verwalten. Viele Implementierungen unterstützen auch die Integration mit Unternehmensverzeichnissen über Standard-LDAP-Schnittstellen (Lightweight Directory Access Protocol). Zusätzliche Sicherheitsfunktionen wie Autorisierungstoken, TLS/SSL-Verschlüsselung (Transport Layer Security / Secure Sockets Layer) usw. sind Standardfunktionen solcher Datenbanken. Diese Funktionen zielen jedoch hauptsächlich auf die Benutzerzugriffskontrolle ab - um zu moderieren, wer auf welche Daten zugreifen kann -; sie befassen sich jedoch nicht mit einer Sicherheits- / Sensibilitätsklassifizierung der Datenstrukturen selbst.

Bekannt sind auch Unternehmensklassifizierungsstufen für Geschäftsdokumente. Unternehmenssoftware wie die Microsoft Office-Suite unterstützt möglicherweise unternehmensspezifische Empfindlichkeits-/Klassifizierungsstufen. Innerhalb eines Unternehmens weist die Funktion "Information Protection" von MS Office dem aktuellen Dokument (z.B. Word, Excel, PowerPoint, etc.) eine unternehmensspezifische Sensibilitäts- oder Vertraulichkeitsklassifizierung zu. In diesem Fall erhalten die Daten selbst eine "Sensitivity-Klassifizierung", aber da sie hauptsächlich für lokale und Ad-hoc-freigegebene Dokumente verwendet werden, kann es keine umfassende Verwaltung des Datenzugriffs auf der Grundlage dieser Empfindlichkeitsklassifizierung geben und die zugeordnete Klassifizierung ist an das gegenständliche Dokument gebunden. Die Berechtigungen oder Restriktionen, die mit dem betreffenden Dokument somit klassifiziert sind, gelten für jegliche Nutzung (nur dieses) Dokumentes und sind für alle Nutzer des Dokumentes sowohl verbindlich als auch gleich. Stattdessen hängt die Frage, wie effektiv ein Unternehmen den Fluss sensibler Daten moderieren kann, entscheidend von der Einhaltung der festgelegten Vertraulichkeitsrichtlinien durch menschliche Mitarbeiter ab, d.h., die Mitarbeiter sind dafür verantwortlich, nicht nur die Klassifizierung korrekt zuzuordnen, sondern auch die Bedingungen zu kennen und durchzusetzen, unter denen sensible Dokumente weitergegeben werden können.

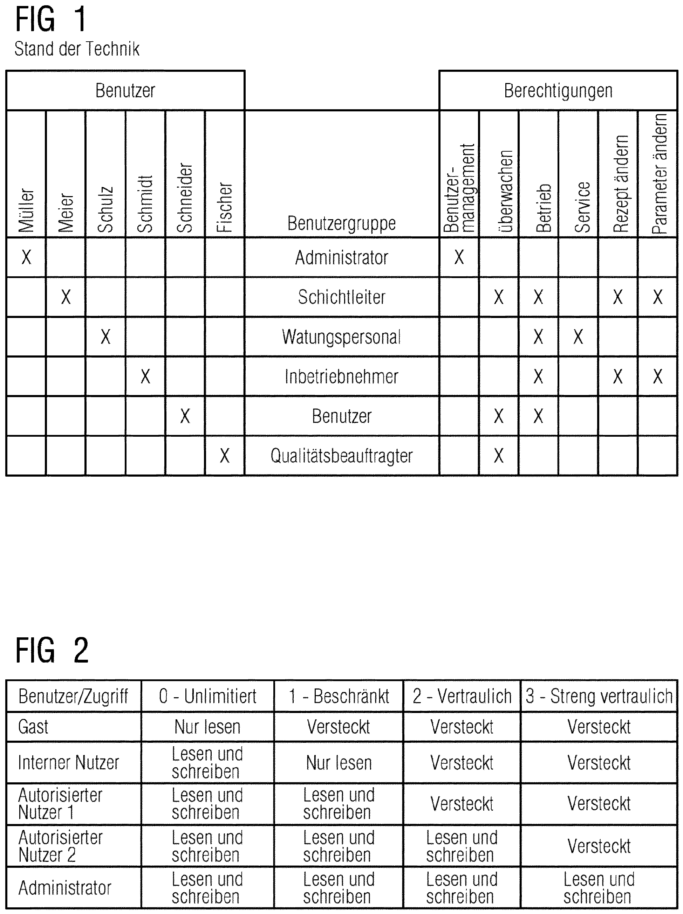

Im industriellen Bereich ist auch eine Zugriffskontrolle in SCADA-Systemen (SCADA = Supervisory Control and Data Access) bekannt. Im Allgemeinen bieten SCADA-Systeme Benutzerverwaltungswerkzeuge, um zu autorisieren, welche Benutzer mit welchen Berechtigungen auf das System zu-greifen dürfen. In Siemens WinCC können z.B. Login-Zugriffs- und Funktions-/Betriebsberechtigungen pro Benutzer vergeben werden, wie in der Tabelle der Figur 1 dargestellt

Es ist also eine Aufgabe der vorliegenden Erfindung, den Zugriff auf Daten im industriellen Umfeld zuverlässiger zu kontrollieren und Zugriffsberechtigungen flexibel an die Bedürfnisse verschiede-er Benutzer und die Vertraulichkeit unterschiedlicher Daten anzupassen.

Im Rahmen der erfindungsgemäßen Lösung dieser Aufgabe können Dateien, Datenströme oder Datenobjekte (z. B. Variablen, Vermögenswerte, Assets, Funktionen, Anwendungen) oder dgl., kurz: Daten, entsprechend ihrem erforderlichen Schutzniveau klassifiziert werden. Diese Datenklassifizierung wird in einer gesamten Anwendung, die sich über viele Geräte und Organisationseinheiten erstrecken kann, berücksichtigt, so dass Benutzer nur auf Objekte einer bestimmten Klassifizierung basierend auf ihrer Berechtigungsstufe zugreifen und diese beeinflussen können (z.B. lesen und schreiben). Zu den typischen Benutzerinteraktionen, die verwaltet werden müssen, gehören:
- Anzeigen (Lesen) von Assets / Aspekten / Variablen und insbesondere den damit verknüpften Daten,
- Bearbeiten (Schreiben) von Assets / Aspekten / Variablen und insbesondere den damit verknüpften Daten,
- Export und Import,
- Sichern und Wiederherstellen.

Der zentrale Punkt des Klassifizierungssystems ist, die Daten oder "Assets" selbst zu kontrollieren. Das Konzept funktioniert sowohl in einem System, welches keine klassische (personenbezogene) Nutzerverwaltung besitzt, also auch in Systemen mit der Verwaltung menschlicher oder nicht-technischer Nutzer (Personen, "user"). Die Verwaltung des Zugriffs auf bestimmte Klassifizierungen erfordert eine Verknüpfung mit der Benutzerverwaltung des Systems, wobei hier aber ein Benutzer (Nutzer, "user") allgemein als eine die Daten oder Funktion oder allgemein das "Asset" nutzende oder zugreifende Entität zu sehen ist, also auch insbesondere ein (externes) Gerät, ein Dienst oder eine andere "Datensenke" sein kann. Auch wenn sich die oft gezeigten Beispiele auf menschliche Nutzer oder allgemein Personen beziehen, denen Rechte, Rollen oder dergleichen zugeordnet sind, bezieht sich die gegenständliche Erfindung allgemein auf Datensenken oder Schnittstellen oder APIs. Der Administrator kann jedem Benutzer (im allgemeinen Sinne) zuweisen, auf welche Klassifizierungen dieser Benutzer (oder alternativ alle Benutzer einer definierten Gruppe) zugreifen kann und mit welchen Interaktionen.

Konkret wird die Aufgabe durch ein Verfahren gemäß Patentanspruch 1, eine Kontrollinstanz gemäß Patentanspruch 11 und durch ein Computerprogrammprodukt gemäß Patentanspruch 12 gelöst.

Dabei wird ein Verfahren zur Kontrolle eines Zugriffs auf strukturierte Daten oder Funktionen einer industriellen Automatisierungsanordnung vorgeschlagen, wobei der Zugriff auf die Daten oder Funktionen kontrolliert wird. Dabei wird den Daten oder Funktionen eine Klassifizierung mit einer bestimmten Vertraulichkeitsklasse (0, ..., 3) aus einer Mehrzahl Vertraulichkeitsklassen (0, ..., 3) zugeordnet, wobei einem Nutzer oder einer technischen Instanz eine Nutzerklasse aus einer Anzahl Nutzerklassen zugeordnet wird, wobei, vorzugsweise nach Art einer Matrix, für viele oder jede der Vertraulichkeitsklassen (0, ..., 3) und für viele oder jede der Nutzerklassen eine Zugriffsberechtigung festgelegt wird, wobei die Zugriffsberechtigung die Restriktionen des Zugriffs der Nutzer oder technischen Instanz der jeweiligen Nutzerklasse auf die der jeweiligen Vertraulichkeitsklasse (0, ..., 3) zugeordneten Daten oder Funktionen definiert, und wobei anhand der jeweils definierten Restriktionen der Zugriff auf die den jeweiligen Vertraulichkeitsklassen (0, ..., 3) zugeordneten Daten oder Funktionen durch die den jeweils den Nutzerklassen zugeordneten Nutzern oder technischen Instanzen kontrolliert wird. Damit werden Benutzer- oder Maschinenzugriff und Berechtigungen aus den Vertraulichkeitsklassifizierungen der Daten bzw. Datenstrukturen oder Funktionen selbst gesteuert und somit ein umfassender Ansatz bereitgestellt, um automatisch die Berechtigung bekannter Benutzer oder technischer Entitäten für den Zugriff auf und die Änderung bestimmter Daten oder Datenstrukturen oder Funktionen zu ermitteln.

Die Aufgabe wird außerdem durch eine Kontrollinstanz (auch Gatekeeper oder system-level Gatekeeper genannt) zur Kontrolle eines Zugriffs auf strukturierte Daten oder Funktionen einer industriellen Automatisierungsanordnung gelöst, wobei die Kontrollinstanz eine Eingangsschnittstelle zum Empfang der zuzugreifenden Daten oder eine API oder dgl. zum Zugriff auf Funktionen umfasst, wobei die Kontrollinstanz zur Kontrolle des Zugriffs auf die Daten oder Funktionen gemäß einem der vorstehend beschriebenen Verfahren ausgebildet ist, und wobei die Kontrollinstanz eine Ausgangsschnittstelle zum Zugriff auf die Daten oder Funktionen umfasst. Damit lassen sich die bereits im Zuge des Verfahrens diskutierten Vorteile erreichen.

Ferner wird die Aufgabe durch ein Computerprogrammprodukt zur Kontrolle eines Zugriffs auf strukturierte Daten oder Funktionen einer industriellen Automatisierungsanordnung gelöst, wobei das Computerprogrammprodukt bei seiner Ausführung auf einem Computer zur Durchführung eines der in den Patentansprüchen beschriebenen Verfahren ausgebildet ist.

Besonders vorteilhaft wird das Verfahren bzw. die Kontrollinstanz in einem industriellen Edge-Gerät angewendet, welches Zugriff auf (vertrauliche) Daten einer industriellen Automatisierungsanordnung hat und zugleich eine Schnittstelle zu einem öffentlichen Netzwerk (Internet, "Cloud") aufweist. Die hier beschriebene Kontrollinstanz kann in diesem Fall auch eine etwaige Firewall ergänzen, indem nicht (nur) portbasiert, sondern content-basiert ein Zugriff auf Daten kontrolliert wird. Industrielle Edge-Geräte ("Edge Devices") werden oft mit Laufzeitumgebungen für Software-Container, beispielsweise sog. Docker-Container, ausgestattet, die mit einem Administrationssystem, z.B. Kubernetes, verwaltet werden. Industrielle Anwendungen laufen dann gekapselt jeweils in einer Laufzeitumgebung ab. Das erfindungsgemäße Verfahren bzw. die Anordnung oder der Dienst (kurz: die Kontrollinstanz) kann vorteilhaft in einem eigenen Container gekapselt sein und/oder in einer eigenen Laufzeitumgebung ablaufen und den Datenverkehr zugeordneter benachbarter Container kontrollieren. Ein Software-Container, der derart anderen Containern bzw. Anwendungen zur Realisierung eines Dienstes zugeordnet ist, wird manchmal auch als Sidecar-Container bezeichnet.

Weitere vorteilhafte Ausgestaltungen des erfindungsgemäßen Verfahrens sind in den abhängigen Patentansprüchen angegeben. Die dabei beschriebenen Merkmale und deren Vorteile gelten sinngemäß auch für die erfindungsgemäße Vorrichtung und das erfindungsgemäße Computerprogrammprodukt. Vorteilhafte Ausgestaltungen können sowohl einzeln, auch als auch in sinnfälliger Kombination miteinander realisiert werden.

In einer vorteilhaften Ausgestaltung wird bei der Weise des Zugriffs, also von Daten-Operationen, zumindest zwischen den Berechtigungen "Lesen" und "Lesen und Schreiben" unterschieden. Damit lässt sich das Verfahren kompatibel mit bestehenden Zugriffskontrollverfahren einsetzen.

Im Falle einer für eine bestimmte Kombination aus Vertraulichkeitsklasse und Nutzerklasse nicht vorhandenen Zugriffsinformation wird vorteilhaft der Zugriff verweigert oder eine andere vordefinierte Maßnahme angewendet, so dass ein Administrator o.ä. nicht jede mögliche Kombination aus Nutzerklasse und Vertraulichkeitsklasse befüllen muss, was insbesondere im Falle einer Matrix-ähnlichen Erfassung unnötige Arbeit erspart.

Durch das erfinderische Konzept ist es vorteilhaft möglich, die einer Vertraulichkeitsklasse und/oder Nutzerklasse zugeordneten Restriktionen nachträglich zu verändern, wobei für nachfolgende Zugriffe auf betroffene Daten die veränderten Restriktionen angewendet werden. Das vereinfacht generelle Anpassungen der Berechtigungen bzw. Restriktionen erheblich.

Ein wesentlicher Vorteil der Erfindung besteht darin, dass sowohl die Daten selbst direkt klassifiziert werden können, als auch die Klassifizierung zunächst einer Variablen oder einer Datenquelle zugeordnet wird und danach automatisch allen Daten, die aus Werten dieser Variablen oder Datenquelle erzeugt oder von diesen abgeleitet werden, zugeordnet wird. Dabei ist es auch vorteilhaft möglich, dass die Klassifizierung einem Datentyp zugeordnet wird und automatisch allen Daten dieses Typs zugeordnet wird. Auch eine Vererbung an abgeleitete Strukturen, Datentypen oder dgl. ist möglich, wobei vorteilhaft kombinierte Daten oder Datentypen oder Datenstrukturen, die aus einzelnen Daten oder Datentypen oder Datenstrukturen Daten mit jeweils eigener Klassifizierung erzeugt werden, insgesamt die strengste dieser Klassifizierungen erben.

Vorteilhaft wird der Zugriff auf die den jeweiligen Vertraulichkeitsklassen zugeordneten Daten durch die den jeweils den Nutzerklassen zugeordneten Nutzern einer Außenschnittstelle einer Komponente der Automatisierungsanordnung mit den Daten, insbesondere in einem Netzwerk-Interface, einer anderen Datenschnittstelle oder einer Software für eine Benutzeroberfläche (BuB - Bedienen und Beobachten; "HMI" - Human Machine Interface), kontrolliert. Dadurch wird der interne Datenfluss in einem Gerät oder einer zusammenhängenden Automatisierungsanordnung ("Domäne") nicht durch die Kontrolle gestört und dennoch ein Schutz der Daten durch Zugriffe von außen, beispielsweise durch andere Geräte, andere Programme, Netzwerkzugriffe, Zugriffe durch Bedien- und Beobachtungsgeräte oder dgl., kontrolliert.

Die Zuordnung von Nutzern, womit auch "technische Nutzer" im Sinne von Geräten, Anwendungen oder Schnittstellen gemeint sind, zu den Nutzerklassen können aus einem internen Nutzungs-Management-System stammen. Alternativ können auch externe Identitäts- und Zugriffsmanagement-Systeme (IAM - Identity + Access Management) wie beispielsweise Firmenverzeichnisse (LDAP) oder das aus dem Netzwerkmanagement bekannte Active Directory verwendet werden. Klassifizierungsschemata für Nutzerklassen können auch aus unternehmensweiten Systemen wie MS Office abgeleitet werden und dann mit Berechtigungen korreliert werden.

Die Erfindung wird nachfolgend anhand der Zeichnungen erläutert.

Dabei zeigen:
- Figur 1: den Stand der Technik mit einer Zuordnung von Benutzern (Nutzern) zu Benutzergruppen und zugeordnete Berechtigungen bzw. Restriktionen am Beispiel eines SCADA-Systems, und
- Figur 2: eine erfindungsgemäße Klassifizierung von Daten bzw. Datenstrukturen mit Vertraulichkeitsklassen und die zugeordneten Nutzerklassen und die jeweils zugeordneten Restriktionen.

In der Tabelle der Figur 1 sind klassische Berechtigungsdefinitionen aus dem Stand der Technik dargestellt. Im industriellen Bereich ist beispielsweise eine Zugriffskontrolle in SCADA-Systemen (SCADA = Supervisory Control and Data Access) bekannt. Im Allgemeinen bieten SCADA-Systeme Benutzerverwaltungswerkzeuge, um zu autorisieren, welche Benutzer mit welchen Berechtigungen auf das System zu-greifen dürfen. Im bekannten SCADA-System Siemens WinCC können z.B. Login-, Zugriffs- und Funktions-/Betriebsberechtigungen pro Benutzer vergeben werden, wie in der Tabelle der Figur 1 dargestellt. Diese Berechtigungen sind jedoch nur auf der allgemeinen Systemfunktionsebene implementiert und nicht an ein Konzept der Sensitivitäts- bzw. Vertraulichkeitsklassifizierung der zugrunde liegenden Datenstrukturen gebunden.

Die Figur 2 zeigt in der oberen Zeile einer Berechtigungsmatrix die Vertraulichkeitsklassen 0, ..., 4, die direkt den zu schützenden Daten oder Datenstrukturen oder Datenquellen zugeordnet werden können; selbstverständlich können auch Systemfunktionen (Speichern, Drucken, Senden, Log-on oder dgl.) als Daten im weiteren Sinne bzw. Daten-Operationen, deren Zugriffe oder Verwendungen kontrolliert werden, klassifiziert werden. Die in Figur 2 gezeigte Tabelle zeigt dabei ein Beispiel für die Zuweisung von Benutzerrollen (Spalte links) als Nutzerklassen und zulässigen Interaktionen/Operationen pro Vertraulichkeitsklasse (nachfolgende Spalten), wobei in den Feldern der Matrix die Restriktionen (z.B. Versteckt - Nur lesen, Lesen und Schreiben) vermerkt sind. Selbstverständlich können die Informationen auch anders als in einer Matrix gezeigt oder gespeichert werden, beispielsweise in Form einer XML-Datei mit entsprechenden Tags.

Um die Klassifizierungsebene der Datenstruktur zu konfigurieren, wird vorteilshaft eine webbasierte Benutzeroberfläche implementiert. Nach der Eingabe wird die Klassifizierungsebene in einer Asset-Hierarchie vererbt.

Darüber hinaus können Teilbäume des Datenmodells keine niedrigere (d. h. freizügigere) Klassifizierungsebene als ihre übergeordneten Elemente aufweisen.

Der Datenzugriff wird dann automatisch von einer Kontrollinstanz, einem sog. "Gatekeeper" auf Systemebene erzwungen, der einfach die Zugriffs- / Berechtigungsstufe des aktuellen Benutzers für eine bestimmte Operation (z. B. Lesen / Schreiben) mit den Vertraulichkeits- oder Sensitivitätsklassifizierungen der relevanten Datenstrukturen vergleicht. Datenstrukturen, die eine höhere Berechtigungsstufe oder Vertraulichkeitsklasse erfordern, als der aktuelle Benutzer/Nutzer/User oder die Benutzergruppe besitzt, werden einfach herausgefiltert, wenn eine Abfrageantwort an den Benutzer zurückgegeben wird. Die Änderung von schreibgeschützten Daten für einen Benutzer wird dann auch ebenso leicht vom Gatekeeper verhindert.

Zusammenfassend weist die vorliegende Erfindung die folgenden Hauptmerkmale auf:
- Die Vertraulichkeits- bzw. Sensitivitätsklassifizierung wird als inhärente Eigenschaft jedes Assets / jeder Variablen / jedes Objekts (allg.: Daten) gespeichert.
- Die Benutzerverwaltung (im Sinne einer Berechtigungsverwaltung für Nutzer, Geräte, Dienste oder sonstige auf Daten zugreifende Entitäten) ist speziell implementiert, um Zugriffsrechte auf die Datenklassifizierung abzubilden.
- Eine Kontrollinstanz oder "Gatekeeper" auf Systemebene ist dafür verantwortlich, die Verteilung von Daten an Benutzer oder andere Datensenken zu moderieren bzw. kontrollieren, indem diese:
   - Berechtigungen vor der Freigabe von Daten an einen Benutzer überprüft;
   - Bei Abfragen an eine Datenbank einen an die Berechtigungen bzw. Restriktionen des betreffenden Nutzers angepassten Filter verwendet; und
   - Berechtigungen des Benutzers überprüft, bevor Änderungen an den Daten zugelassen werden.

Obwohl die obige Implementierung eine speziell konfigurierte Zuordnung von Berechtigungen pro Klassifizierung voraussetzt (siehe Tabelle aus Figur 2), ist auch die Integration mit einem vorhandenen Unternehmensverzeichnis und Klassifizierungsschema möglich.

Das Klassifizierungssystem ist nicht also nicht (zwingend) klassisch nutzerbasiert (Nutzer im Sinne einer Person). Basierend auf der Klassifikation soll gesteuert werden, ob die Daten in einer gewissen Funktion oder dergleichen verarbeitet oder über ein Interface übertragen werden dürfen. Es geschieht also eine Steuerung der Datenflüsse und Zugriffe der Interfaces/Funktionen.

Die Verknüpfung zum Nutzer (im Sinne einer Person) existiert insofern, als das Nutzerinterface (z.B. HMI - Human Machine Interface) ebenfalls einen Datenfluss ermöglicht, welcher gesteuert werden muss. Dies geschieht analog zu allen anderen Interfaces, z.B.:
- Variable X hat Klassifizierung Y. Die Daten dürfen über das Cloud-Interface nur lesend verwendet werden.
- Variable X hat Klassifizierung Y. Die Daten dürfen über das Nutzerinterface von Nutzer Z nur lesend verwendet werden.

Somit gibt es keine spezielle Funktion eines (menschlichen) Nutzers in diesem System, sondern das "HMI" oder ein anderer Zugang ist eines von vielen Interfaces, welche Datenflüsse erlaubt, welche gesteuert werden müssen. Hat ein Produkt keine "humane" Nutzerverwaltung, ändert sich in diesem Konzept im Prinzip nichts. Wesentlich ist also eine Zugriffskontrolle auf Daten, Datenquellen, Funktionen, Schnittstellen, Anwendungen oder andere "Assets" durch humane Nutzer oder technische Instanzen, wobei letztere wiederum Geräte, Anwendungen, Schnittstellen, Funktionen oder andere Entitäten sein können.

Die vorliegende Erfindung bietet einen entscheidenden Unterschied zu bestehenden ähnlichen Technologien, nämlich dass Benutzerzugriff und Berechtigungen automatisch abgeleitet und erzwungen werden, basierend auf der Vertraulichkeitsklassifizierungen, die den Datenstrukturen selbst innewohnen. Somit ist die Vertraulichkeit der Daten im gesamten Datenfluss gewährleistet.

Im Vergleich:
- Datenbanktechnologien bieten umfassende Benutzerverwaltungs- und Zugriffskontrollwerkzeuge, aber die zugrunde liegenden Datenstrukturen enthalten im Allgemeinen keine spezifischen Vertraulichkeitsklassifizierungszuordnungen, es sei denn, sie werden manuell / benutzerdefiniert implementiert.
- Ebenso unterstützen SCADA / WinCC Systeme in der Regel Benutzerverwaltung und Systemfunktionsberechtigungen, stellen jedoch keinen direkten Bezug zu einem zugrunde liegenden Konzept der Vertraulichkeitsklassifizierung der verfügbaren Datenstrukturen her. Darüber hinaus beschränkt WinCC den Zugriff nur auf ganze Systemfunktionen, nicht jedoch selektiv innerhalb der Funktion. Ebenso würde WinCC nur den Zugriff auf die gesamte Datenstruktur erlauben oder verhindern; die vorliegende Erfindung hingegen steuert selektiv, welche Daten zugänglich sind.
- Unternehmensklassifizierungstools wie die "Information Protection" -Funktion von Microsoft Office bieten eine Klassifizierung der Vertraulichkeit pro Dokument, aber die Durchsetzung dessen, wer auf diese hochsensiblen Dokumente zugreifen kann, hängt davon ab, dass die Mitarbeiter die Vertraulichkeits- und Datenfreigaberichtlinien genau implementieren und einhalten.

Einfacher ausgedrückt werden nach der vorliegenden Erfindung Benutzerzugriff und Berechtigungen bzw. zulässige Operationen aus den Vertraulichkeitsklassifizierungen der Datenstrukturen selbst gesteuert. Folglich wird ein umfassender Ansatz bereitgestellt, um automatisch die Berechtigung bekannter Benutzer für den Zugriff auf und die Änderung einer bestimmten Datenstruktur zu ermitteln - der "System-level Gatekeeper", kurz Gatekeeper (Kontrollinstanz; Computerprogramm/-programmprodukt zur Zugriffskontrolle) auf Systemebene muss nur die Berechtigungsstufe des Benutzers aus einer Nutzerklasse für eine gewünschte Operation (z. B. Lesen / Schreiben) mit der Sensitivitäts- bzw. Vertraulichkeitsklassifizierung der Daten vergleichen.

## Patentansprüche

1. Verfahren zur Kontrolle eines Zugriffs auf strukturierte Daten oder Funktionen einer industriellen Automatisierungsanordnung,
wobei der Zugriff auf die Daten oder Funktionen kontrolliert wird,
**dadurch gekennzeichnet, dass**
den Daten oder Funktionen eine Klassifizierung mit einer bestimmten Vertraulichkeitsklasse (0, ..., 3) aus einer Mehrzahl Vertraulichkeitsklassen (0, ..., 3) zugeordnet wird,
dass einem Nutzer oder einer technischen Instanz eine Nutzerklasse aus einer Anzahl Nutzerklassen zugeordnet wird, dass, vorzugsweise nach Art einer Matrix, für viele oder jede der Vertraulichkeitsklassen (0, ..., 3) und für viele oder jede der Nutzerklassen eine Zugriffsberechtigung festgelegt wird, wobei die Zugriffsberechtigung die Restriktionen des Zugriffs der Nutzer oder technischen Instanz der jeweiligen Nutzerklasse auf die der jeweiligen Vertraulichkeitsklasse (0, ..., 3) zugeordneten Daten oder Funktionen definiert, und
dass anhand der jeweils definierten Restriktionen der Zugriff auf die den jeweiligen Vertraulichkeitsklassen (0, ..., 3) zugeordneten Daten oder Funktionen durch die den jeweils den Nutzerklassen zugeordneten Nutzern oder technischen Instanzen kontrolliert wird.

2. Verfahren nach Patentanspruch 1,
**dadurch gekennzeichnet, dass**
bei den Zugriffsberechtigungen zumindest zwischen den Berechtigungen "Lesen" und *"*Lesen und Schreiben*"* als zulässige Operationen zu den Daten unterschieden wird.

3. Verfahren nach einem der vorhergehenden Patentansprüche,
**dadurch gekennzeichnet, dass**
im Falle einer für eine bestimmte Kombination aus Vertraulichkeitsklasse (0, ..., 3) und Nutzerklasse nicht vorhandenen Zugriffsberechtigung der Zugriff verweigert wird.

4. Verfahren nach einem der vorhergehenden Patentansprüche,
**dadurch gekennzeichnet, dass**
die einer Vertraulichkeitsklasse (0, ..., 3) und/oder Nutzerklasse zugeordneten Restriktionen nachträglich verändert werden, wobei für nachfolgende Zugriffe auf betroffene Daten oder Funktionen die veränderten Restriktionen angewendet werden.

5. Verfahren nach einem der vorhergehenden Patentansprüche,
**dadurch gekennzeichnet, dass**
die Vertraulichkeitsklasse (0, ..., 3) einer Variablen oder einer Datenquelle zugeordnet wird und automatisch allen Daten, die aus Werten dieser Variablen oder Datenquelle erzeugt oder von diesen abgeleitet werden, zugeordnet wird.

6. Verfahren nach einem der vorhergehenden Patentansprüche,
**dadurch gekennzeichnet, dass**
die Vertraulichkeitsklasse (0, ..., 3) einem Datentyp zugeordnet wird und automatisch allen Daten dieses Typs zugeordnet wird.

7. Verfahren nach einem der vorhergehenden Patentansprüche,
**dadurch gekennzeichnet, dass**
die jeweilige Vertraulichkeitsklasse (0, ..., 3) zusammen mit den jeweiligen Daten gespeichert wird.

8. Verfahren nach Patentanspruch 7,
**dadurch gekennzeichnet, dass**
die Vertraulichkeitsklasse (0, ..., 3) als Meta-Information mit einem Datensatz oder einem Datenstrom gespeichert, vorzugsweise diesem vorangestellt wird.

9. Verfahren nach einem der vorhergehenden Patentansprüche,
**dadurch gekennzeichnet, dass**
kombinierte Daten oder Datentypen oder Datenstrukturen, die aus einzelnen Daten oder Datentypen oder Datenstrukturen Daten mit jeweils eigener Vertraulichkeitsklasse (0, ..., 3) erzeugt werden, insgesamt die strengste dieser Vertraulichkeitsklassen (0, ..., 3) erben.

10. Verfahren nach einem der vorhergehenden Patentansprüche,
**dadurch gekennzeichnet, dass**
der Zugriff auf die den jeweiligen Vertraulichkeitsklassen (0, ..., 3) zugeordneten Daten durch die den jeweils den Nutzerklassen zugeordneten Nutzern einer Außenschnittstelle einer Komponente der Automatisierungsanordnung mit den Daten, insbesondere in einem Netzwerk-Interface, einer anderen Datenschnittstelle oder einer Software für eine Benutzeroberfläche, kontrolliert wird.

11. Kontrollinstanz zur Kontrolle eines Zugriffs auf strukturierte Daten oder Funktionen einer industriellen Automatisierungsanordnung,
**dadurch gekennzeichnet, dass**
die Kontrollinstanz eine Eingangsschnittstelle zum Empfang der zuzugreifenden Daten oder eine Zugriffsschnittstelle, insbesondere ein API, zum Zugriff auf die Funktionen, umfasst,
die Kontrollinstanz zur Kontrolle des Zugriffs auf die Daten oder Funktionen gemäß einem der vorstehend beschriebenen Verfahren ausgebildet ist, und
die Kontrollinstanz eine Ausgangsschnittstelle zum Zugriff auf die Daten oder die Funktionen umfasst.

12. Computerprogrammprodukt zur Kontrolle eines Zugriffs auf strukturierte Daten oder auf Funktionen einer industriellen Automatisierungsanordnung,
**dadurch gekennzeichnet, dass**
das Computerprogrammprodukt bei seiner Ausführung auf einem Computer zur Durchführung eines der Verfahren gemäß Patentansprüchen 1 bis 10 ausgebildet ist.
